(19)

Europäisches
Patentamt
European
Patent Office
Office européen
des brevets

(11) **EP 2 068 596 A2**

# (12) EUROPEAN PATENT APPLICATION

(43) Date of publication:
**10.06.2009 Bulletin 2009/24**

(51) Int Cl.:
**H04W 72/12** (2009.01)

(21) Application number: **08157186.1**

(22) Date of filing: **29.05.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **06.12.2007 KR 20070126354**

(71) Applicants:
• **Electronics and Telecommunications
Research Institute**
**Yuseong-gu, Daejeon-si**
**305-700 (KR)**
• **Samsung Electronics Co., Ltd**
**Suwon-si, Gyeonggi-do 442-742 (KR)**

(72) Inventors:
• **Song, Jae-su**
**Daejeon-si (KR)**
• **Baek, Seung-kwon**
**Daejeon-si (KR)**
• **Shin, Yeon-seung**
**Daejeon-si (KR)**
• **Kim, Yeong-jin**
**Daejeon-si (KR)**

(74) Representative: **Betten & Resch**
**Patentanwälte**
**Theatinerstrasse 8**
**(Fünf Höfe)**
**80333 München (DE)**

(54) **System and method for transmitting system information in base station of wireless communication system**

(57) A system and method for transmitting system information in a base station of a wireless communication system are provided, The system information is generated by selectively inserting scheduling blocks containing scheduling information for scheduling units into a master information block and a first scheduling unit of a system information block. A maximum amount of information is inserted into the master information block to be transmitted on a system information dedicated channel, such that an amount of information of the system information block to be transmitted on a shared channel can be reduced and the load on the shared channel for system information transmission can be reduced.

FIG.10

EP 2 068 596 A2

**Description**

CROSS REFERENCE TO RELATED APPLICATIONS

This application claims priority from Korean Patent Application No. 10-2007-0126354, filed on December 6, 2007, the disclosure of which is incorporated herein in its entirety by reference.

BACKGROUND OF THE INVENTION

FIELD OF THE INVENTION

The present invention relates to a system and method for transmitting system information in a base station of a wireless communication system, and more particularly, to a technique in which a base station processes system information including various parameters required for operating a user equipment (UE) such as parameters for the initiation of the UE by power-on, a call connection, and the like.

This work was supported by the IT R&D program of Ministry of Information and Communication (MIC)/Institute for Information Technology Advancement (IITA) [2005-S-404-23, Research and development on 3G long-term evolution access system].

DESCRIPTION OF THE RELATED ART

In mobile communication systems, various parameters required for operating a UE such as parameters for the initiation of the UE by power-on, a call connection, and the like are acquired from system information broadcast by a base station.

The system information is propagated to all cells in which all UEs may receive the system information on a broadcast channel. In 3G mobile communication systems, the system information is configured with a master information block (MIB) and a system information block (SIB).

The MIB includes a parameter (public land mobile network identity (PLMN ID)) to be quickly acquired by a UE for a PLMN search or scheduling information of each SIB. A channel for transmitting the system information is a broadcast channel. A structure of the broadcast channel is different between a 3rd generation partnership project (3GPP) wideband code division multiple access (WCDMA) system and a 3G long term evolution (3G LTE) system.

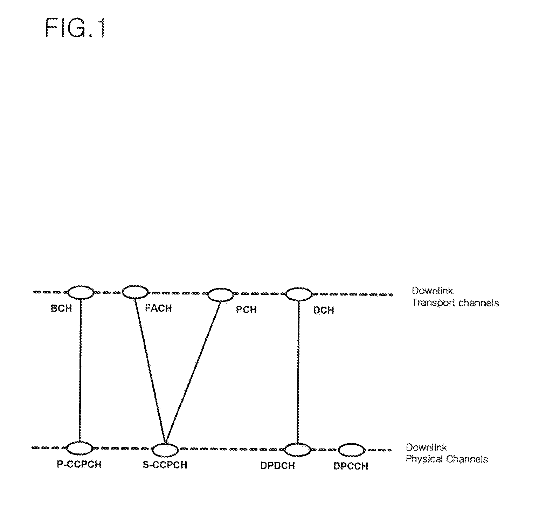

The channel structure of the 3GPP WCDMA system is shown in FIG. 1. Here, the system information is transmitted on a broadcast channel (BCH) serving as a transport channel and a primary common control physical channel (P-CCPCH) serving as a physical channel.

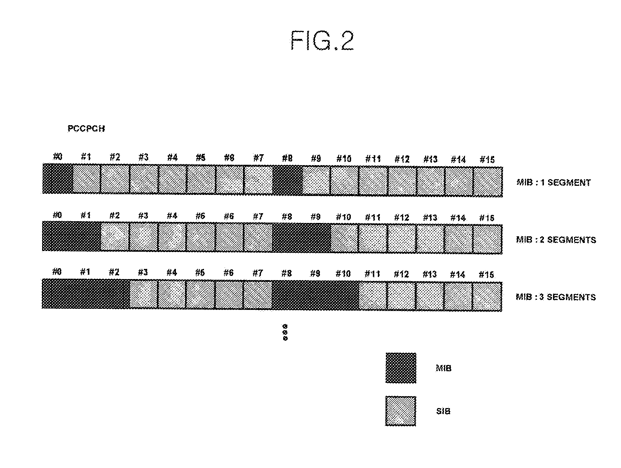

In the 3GPP WCDMA system, as shown in FIG. 2, an MIB and SIB are transmitted on the same channel. The MIB is repeated in a period of 80 ms and the SIB is transmitted in the remaining interval.

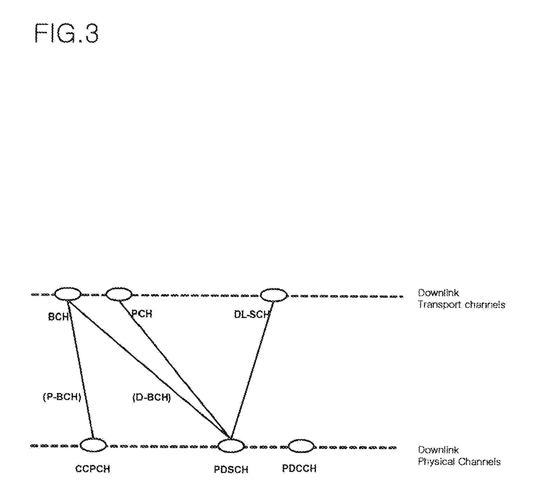

The channel structure of the 3G LTE system is shown in FIG. 3. Here, the system information uses a BCH as a transport channel. Physical channels are divided into a common control physical channel (CCPCH) and a physical downlink shared channel (PDSCH) and are transmitted.

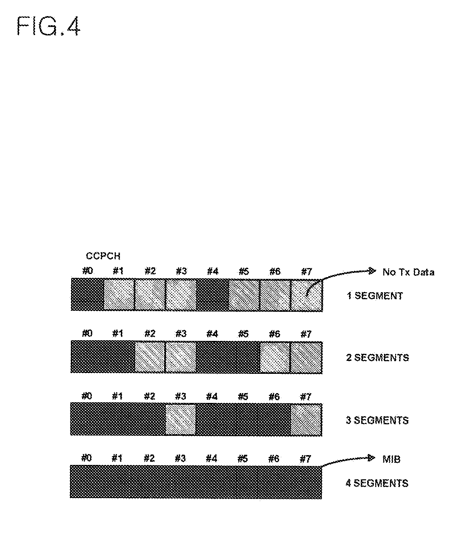

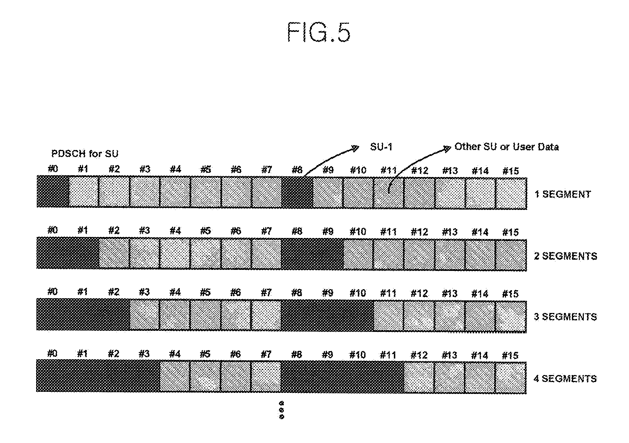

That is, in the 3G LTE system, an MIB is transmitted on the CCPCH as shown in FIG. 4 and an SIB is transmitted on the PDSCH as shown in FIG. 5.

The CCPCH is a system information dedicated channel on which only the MIB is transmitted and the PDSCH is a shared channel on which other signals and data are transmitted on a physical channel or downlink shared channel CDL-SCH). Data of multiple channels are transmitted together on the PDSCH through a media access control (MAC) scheduling procedure.

Since the physical channel for transmitting the system information is separated in the 3GPP WCDMA system, the system information transmission does not affect other traffic. However, since the SIB of the system information in the 3G LTE system is transmitted on the PDSCH shared channel, the SIB transmission may affect other traffic transmissions.

That is, since the SIB and other signals and traffic data are multiplexed in the 3G LTE system, other traffic may not be transmitted when a large number of SIBs are transmitted. For this reason, a bandwidth occupied by an SIB transmission should be minimized in the 3G LTE system.

Accordingly, the inventor has conducted research on a technique for transmitting system information in a base station of a wireless communication system that can reduce an amount of information of an SIB to be transmitted on a shared channel by inserting a maximum amount of information into an MIB to be transmitted on a system information dedicated channel, and that can improve system performance by reducing the load on the shared channel for system information transmission and transmitting an increased amount of other data in a wireless communication system such as the 3G LTE system.

SUMMARY OF THE INVENTION

The present invention provides a system and method for transmitting system information in a base station of a wireless communication system that can reduce an amount of information of a system information block to be transmitted on a shared channel by inserting a maximum amount of information into a master information block to be transmitted on a system information dedicated channel, thereby reducing the load on the shared channel for system information transmission in the wireless communication system.

The present invention discloses system information generated by selectively inserting scheduling blocks containing scheduling information for scheduling units into a master information block and a first scheduling unit of a system information block.

Additional aspects of the invention will be set forth in the description which follows, and in part will be apparent from the description, or may be learned by practice of the invention.

It is to be understood that both the forgoing general description and the following detailed description are exemplary and explanatory and are intended to provide further explanation of the invention as claimed.

BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the aspects of the invention.

FIG. 1 shows a channel structure of a 3GPP WCDMA system;

FIG. 2 shows a radio frame structure of a 3GPP-system information dedicated channel of the 3GPP WCDMA system;

FIG. 3 shows a channel structure of a 3G LTE system;

FIG. 4 shows a radio frame structure of a system information dedicated channel of the 3G LTE system;

FIG. 5 shows a radio frame structure of a shared channel of the 3G LTE system;

FIG. 6 shows an example of a system information structure in the 3G LTE system;

FIG. 7 shows another example of a system information structure in the 3G LTE system;

FIG. 8 shows a schematic radio frame structure of the 3G LTE system;

FIG. 9 shows a schematic diagram of system information segments;

FIG. 10 is a block diagram showing an exemplary embodiment of a system information transmission system of a base station of a wireless communication system according to the present invention;

FIG. 11 shows an exemplary embodiment of a system information structure according to the present invention;

FIG. 12 is a flowchart showing an example of determining where to insert scheduling information; and

FIG. 13 is a flowchart showing a system information transmission procedure according to an exemplary embodiment of the present invention.

DETAILED DESCRIPTION OF EXEMPLARY EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity.

In a 3G LTE system, it is prescribed that SIBs having the same repetition period among all SIBs are classified into one scheduling unit (SU) and all the SIBs are processed in units of scheduling.

In the current standard of the 3G LTE system, it is prescribed that a first SU (SU-1) of the SUs is transmitted in an early repetition period, which includes information to be quickly acquired by a UE and scheduling information for other SUs and has a repetition period of 80 ms.

Since a bandwidth occupied by the first SU (SU-1) significantly affects a bandwidth occupied by an SIB in a PDSCH, the load on the PDSCH for system information transmission can be reduced when a size of the first SU (SU-1) decreases.

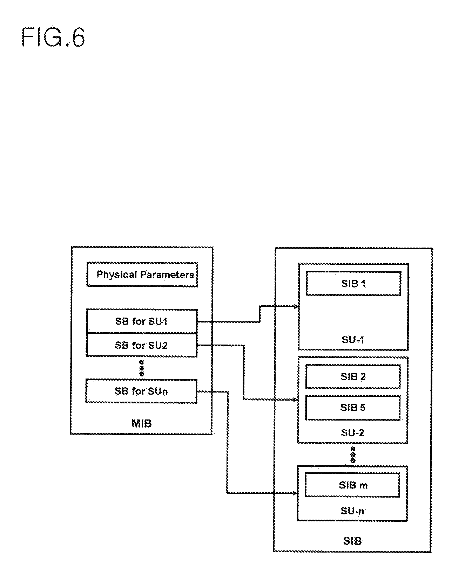

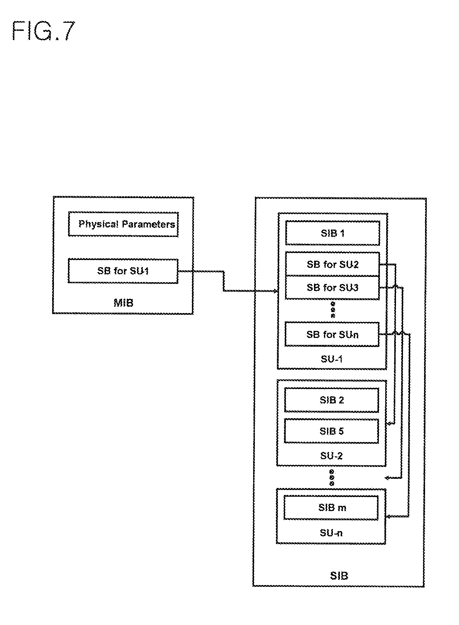

The 3G LTE system standard considers a method for inserting scheduling information for all SUs into an MIB as shown in FIG. 6 and a method for inserting scheduling information for the first SU (SU-1) into the MIB and inserting scheduling information for the remaining SUs into the first SU (SU-1) as shown in FIG. 7.

Since the method of FIG. 7 minimizes a size of the MIB and maximizes a size of the first SU (SUs-1), the bandwidth occupied by the SIB in the PDSCH undesirably increases. Since the method of FIG. 6 maximizes the size of the MIB and minimizes the size of the first SU (SU-1), the bandwidth occupied by the SIB in the PDSCH is minimized. Accordingly, the method of FIG. 6 is more advantageous than that of FIG. 7.

However, since a size of other information (physical parameters) to be included in the MIB is variable, the method of FIG. 6 may be not always advantageous.

According to an exemplary embodiment of the present invention, a configuration is proposed which can reduce an amount of information of an SIB to be transmitted on a shared channel such as a PDSCH or the like by generating an MIB including a maximum amount of scheduling information allowed for a system information dedicated channel such as a CCPCH or the like such that scheduling information for as many SUs as possible is included in the MIB and scheduling information for the remaining SUs is included in a first SU (SUs-1).

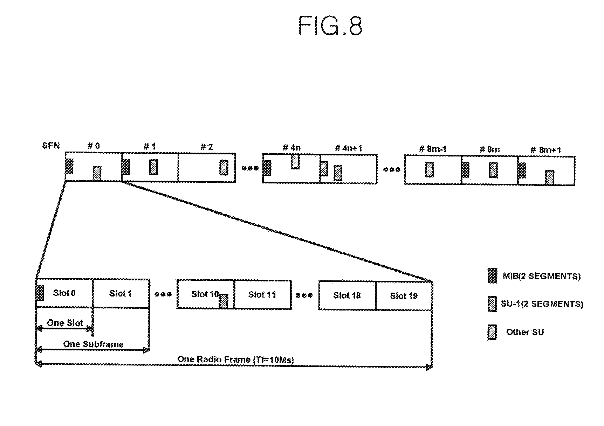

FIG. 8 shows a schematic radio frame structure of the 3G LTE system. A radio frame is configured with two-dimensional resource blocks in which the horizontal axis represents the time and the vertical axis represents the frequency. One frame having a length of 10 ms is configured with 10 subframes in which one subframe is configured in two slots.

In this radio frame structure, the CCPCH on which the MIB is transmitted occupies a resource block corresponding to 1.25 MHz in a first slot (Slot 0) of the radio frame. Since the CCPCH has a transmission time interval (TTI) of 40 ms, the same MIB is repeated every four MIBs.

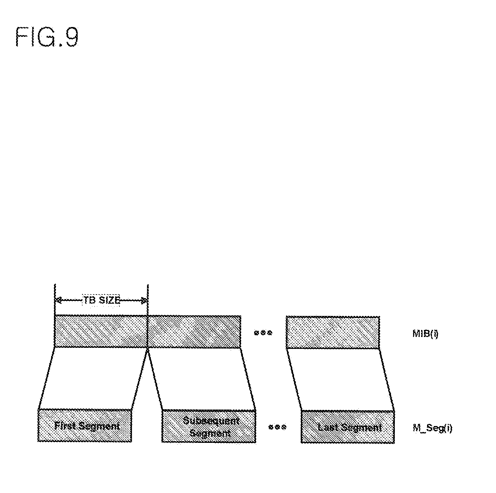

On the other hand, the system information is segmented and transmitted in a transport block (TB) size of a BCH in a radio resource control (RRC) protocol. FIG. 9 shows a schematic diagram of system information segments.

In the pattern as shown in FIG. 4, the MIB is segmented and transmitted on the CCPCH. That is, when the MIB is classified into one segment, one of four radio frames having the TTI of 40 ms is used and no data is transmitted on the CCPCH corresponding to the remaining three frames.

Similarly, the MIB is divided into two or three segments, two or three radio frames are used in the TTI of 40 ms and the remaining frame(s) is(are) unused. When the MIB is divided into four segments, the CCPCH is fully used. The number of segments of the MIB, that is, four, is set to a reference value using a total of a maximum bandwidth of the CCPCH. The reference value using the total of the maximum bandwidth of the CCPCH is used upon system information generation to be described later.

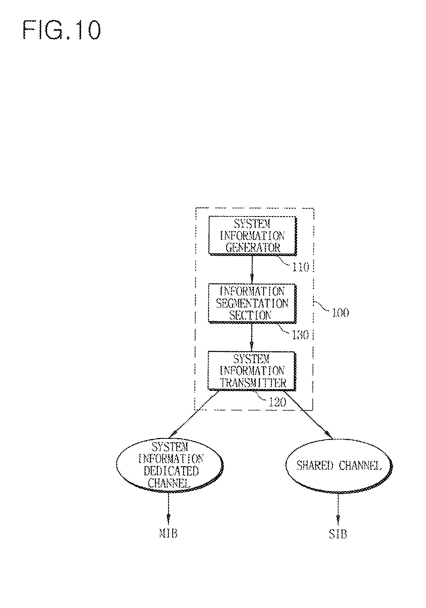

FIG. 10 is a block diagram showing an exemplary embodiment of a system information transmission system of a base station of a wireless communication system according to the present invention. As shown in FIG. 10, a system information transmission system 100 of the base station of the wireless communication system includes a system information generator 110 and a system information transmitter 120, and can further include an information segmentation section 130.

The system information generator 110 generates system information by selectively inserting scheduling blocks (SBs) containing scheduling information for SUs into an MIB and a first SU (SU-1) of an SIB.

The system information transmitter 120 transmits an MIB on a system information dedicated channel and transmits the SIB on a shared channel. At this time, the system information dedicated channel transmits only the system information as does a CCPCH, being a physical channel of the 3G LTE system, or the like, and the shared channel shares and transmits multiple information elements as does a PDSCH, being a physical channel of the 3G LTE system, or the like.

At this time, the information segmentation section 130 segments the system information generated by the system information generator 110 in a TB size of a broadcast channel being a transport channel and outputs the segmented system information to the system information transmitter 120. The system information can be processed in a radio link control (RLC) layer and can be transmitted on the system information dedicated channel and the shared channel of a physical layer being a lower layer. At this time, the broadcast channel is the transport channel such as a BCH of the 3G LTE system or the like.

Specifically, a system information generation operation by the system information generator 110 will be described. The system information generator 110 should generate the MIB including a maximum amount of scheduling information for SUs such that the MIB can occupy a maximum bandwidth of the system information dedicated channel.

For example, the system information generator 110 can generate the system information by generating the MIB including SBs for the first SU (SU-1) to an i-th SU (SU-i) in which the number of MIB segments does not exceed the reference value using the total of the maximum bandwidth of the system information dedicated channel and generating the first SU (SU-1) of the SIB including SBs for an (i+1)-th SU (SU-(i+1)) to an n-th SU (SU-n) in which the number of MIB segments exceeds the reference value using the total of the maximum bandwidth of the system information dedicated channel. Since the reference value using the total of the maximum bandwidth of the system information dedicated channel has been described above, its description is omitted.

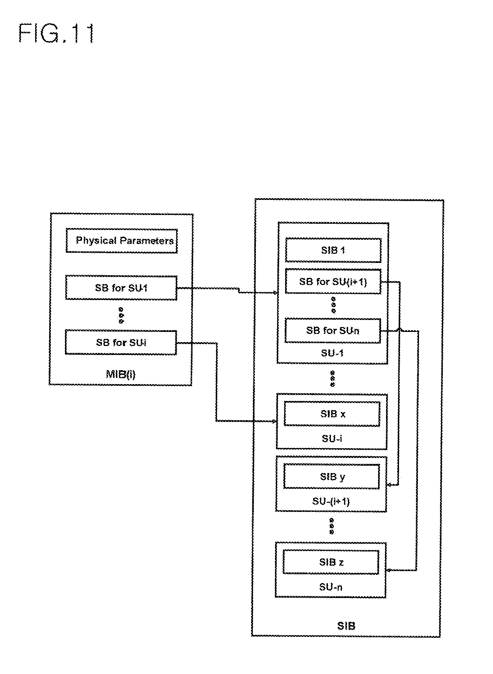

FIG. 11 shows structures of the MIB and SIB generated by the system information generator 110. As shown in FIG. 11, it can be seen that the MIB includes the SBs for the first SU (SU-1) to the i-th SU (SU-i) and the first SU (SU-1) of the SIB includes the SBs for the (i+1)-th SU (SU-(i+1)) to the n-th SU (SU-n).

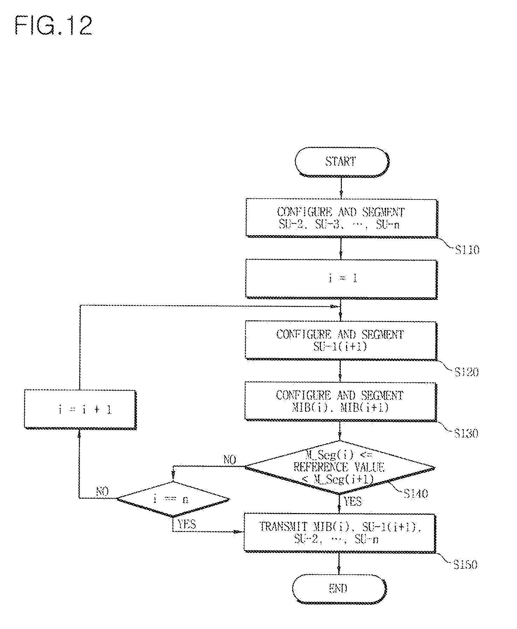

FIG. 12 is a flowchart showing an example of determining where to actually insert scheduling information for SUs. First, in operation S110, the second SU (SU-2) to the n-th SU (SU-n) are configured and segmented. An SB size of each SU is defined by the number of segments of each SU.

When the number of segments of each SU except the first SU is defined, SU-1(i+1) including SBs is configured and segmented in operation S120. At this time, SU-1(i+1) is the first SU (SU-1) including the SBs for the (i+1)-th SU (SU-(i+1)) to the n-th SU (SU-n).

Then, in operation S130, MIB(i) and MIB(i+1) are configured and segmented. At this time, MIB(i) is the MIB including the SBs for the first SU (SU-1) to the i-th SU (SU-i) and MIB(i+1) is the MIB including the SBs for the first SU (SU-1) to the (i+1)-th SU (SU-(i+1)).

Then, in operation S140, M_Seg(i), representing the number of segments of MIB(i), and M_Seg(i+1), representing the number of segments of MIB(i+1), are computed and the two values are compared to the reference value using the total of the maximum bandwidth of the system information dedicated channel. For example, when the reference value is 4, the comparison is done using the following inequality.

$$M\_Seg(i) \leq 4 < M\_Seg(i+1)$$

When the above inequality is satisfied, MIB(i) configured by an i value, the MIB computed for SU-1(i+1), and the first SB of the SIB are generated. MIB(i), SU-1 (i+1), SU-2,--, SU-n are generated as the final system information in operation S 150.

When the above inequality is not satisfied, it is checked whether the i value reaches n. When the i value reaches n, MIB(i), SU-1(i+1), SU-2, ---, SU-n are generated as the final system information in operation S150.

When the above inequality is not satisfied and the i value does not reach n, the above procedure is repeated by incrementing the i value by one.

Thereby, the MIB capable of maximally using a radio frame of the system information dedicated channel can be acquired. The system information transmitter 120 transmits the MIB on the system information dedicated channel and transmits the SIB on the shared channel. Since an amount of information of the SIB to be transmitted on the shared channel can be reduced by inserting a maximum amount of information into the MIB to be transmitted on the system information dedicated channel in the wireless communication system, the load on the shared channel for a system information transmission can be reduced, an increased amount of other data can be transmitted on the shared channel, and the system performance can be improved.

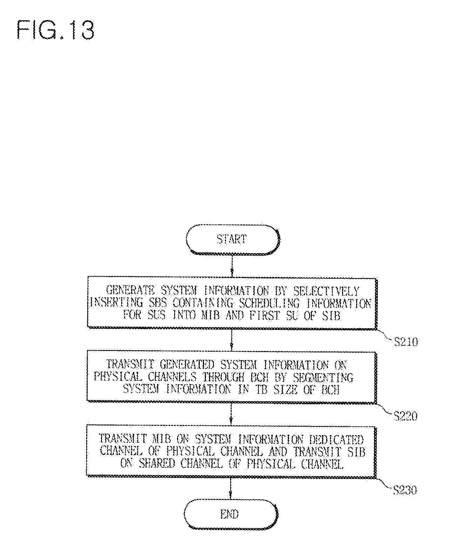

A system information transmission procedure of the system information transmission system of the base station of the wireless communication system having the above-described configuration according to an exemplary embodiment of the present invention will be described with reference to FIG. 13.

First, in operation S210, the base station of the wireless communication system generates system information by selectively inserting SBs containing scheduling information for SUs into an SIB and a first SU (SU-1) of an SIB.

At this time, the base station of the wireless communication system generates the system information by generating the MIB including SBs for the first SU (SU-1) to an i-th SU (SU-i) in which the number of MIB segments does not exceed the reference value using the total of the maximum bandwidth of the system information dedicated channel and generating the first SU (SU-1) of an SIB including SBs for an (i+1)-th SU (SU-(i+1)) to an n-th SU (SU-n) in which the number of MIB segments exceeds the reference value using the total of the maximum bandwidth of the system information dedicated channel.

Then, in operation S220, the base station of the wireless communication system segments the generated system information of operation S210 in a TB size of the broadcast channel being the transport channel and transmits the system information on the physical channel through the broadcast channel.

Then, in operation S230, the base station of the wireless communication system transmits the MIB included in the transmitted system information of operation S220 on the system information dedicated channel of the physical channel and transmits the SIB on the shared channel of the physical channel.

As apparent from the above description, the present invention can reduce an amount of information of an SIB to be transmitted on a shared channel by inserting a maximum amount of information into an MIB to be transmitted on a system information dedicated channel in the wireless communication system, such that the load on the shared channel for system information transmission can be reduced, an increased amount of other data can be transmitted on the shared channel, and the system performance can be improved.

The present invention is advantageous in that an amount of information of a system information block to be transmitted on a shared channel can be reduced by inserting a maximum amount of information into a master information block to be transmitted on a system information dedicated channel in a wireless communication system, such that the load on the shared channel for system information transmission can be reduced, an increased amount of other data can be transmitted on the shared channel, and the system performance can be improved.

The present invention can be industrially used in technical fields for processing and transmitting system information and application fields thereof.

It will be apparent to those skilled in the art that various modifications and variations can be made in the present invention without departing from the spirit or scope of the invention. Thus, it is intended that the present invention covers the modifications and variations of this invention provided they come within the scope of the appended claims and their equivalents.

**Claims**

1. A system for transmitting system information in a base station of a tireless communication system, comprising:

   a system information generator for generating system information by selectively inserting scheduling blocks containing scheduling information for scheduling units into a master information block and a first scheduling unit of a system information block; and
   a system information transmitter for transmitting the master information block on a system information dedicated channel and transmitting the system information block on a shared channel.

2. The system of claim 1, further comprising:

   a system information segmentation section for segmenting the system information generated by the system information generator in a transport block size of a broadcast channel.

**3.** The system of claim 1, wherein the system information generator inserts a maximum amount of scheduling information for the scheduling units into the master information block such that the master information block can occupy a maximum bandwidth of the system information dedicated channel.

**4.** The system of claim 3, wherein the system information generator generates the master information block having scheduling blocks for a first scheduling unit to an i-th scheduling unit in which the number of segments of the master information block does not exceed a reference value.

**5.** The system of claim 3, wherein the system information generator generates the first scheduling unit of the system information block having scheduling blocks for an (i+1)-th scheduling unit to an n-th scheduling unit in which the number of segments of the master information block exceeds a reference value.

**6.** The system of claim 2, wherein the system information generator inserts a maximum amount of scheduling information for the scheduling units into the master information block such that the master information block can occupy a maximum bandwidth of the system information dedicated channel.

**7.** The system of claim 6, wherein the system information generator generates the master information block having scheduling blocks for a first scheduling unit to an i-th scheduling unit in which the number of segments of the master information block does not exceed a reference value.

**8.** The system of claim 6, wherein the system information generator generates the first scheduling unit of the system information block having scheduling blocks for an (i+1)-th scheduling unit to an n-th scheduling unit in which the number of segments of the master information block exceeds a reference value.

**9.** A method for transmitting system information in a base station of a wireless communication system, comprising:

> generating system information by selectively inserting scheduling blocks containing scheduling information for scheduling units into a master information block and a first scheduling unit of a system information block;
> segmenting the generated system information in a transport block size of a broadcast channel being a transport channel and transmitting the segmented system Information on physical channels through the broadcast channel; and

transmitting the master information block of the transmitted system Information on a system information dedicated channel of the physical channel and transmitting the system information block on a shared channel of the physical channel.

**10.** The method of claim 9, wherein the generating of the system information comprises:

> generating the master information block having scheduling blocks for a first scheduling unit to an i-th scheduling unit in which the number of segments of the master information block does not exceed a reference value.

**11.** The method of claim 9, wherein the generating of the system information comprises:

> generating the first scheduling unit of the system information block having scheduling blocks for an (1+1)-th scheduling unit to an n-th scheduling unit in which the number of segments of the master information block exceeds a reference value.

FIG.1

Downlink
Transport channels

BCH    FACH    PCH    DCH

Downlink
Physical Channels

P-CCPCH    S-CCPCH    DPDCH    DPCCH

EP 2 068 596 A2

# FIG.2

PCCPCH

#0 #1 #2 #3 #4 #5 #6 #7 #8 #9 #10 #11 #12 #13 #14 #15

MIB : 1 SEGMENT

#0 #1 #2 #3 #4 #5 #6 #7 #8 #9 #10 #11 #12 #13 #14 #15

MIB : 2 SEGMENTS

#0 #1 #2 #3 #4 #5 #6 #7 #8 #9 #10 #11 #12 #13 #14 #15

MIB : 3 SEGMENTS

MIB

SIB

FIG.3

Downlink
Transport channels

BCH    PCH    DL-SCH

(P-BCH)    (D-BCH)

CCPCH    PDSCH    PDCCH

Downlink
Physical Channels

FIG.4

CCPCH

| #0 | #1 | #2 | #3 | #4 | #5 | #6 | #7 |

→ No Tx Data

1 SEGMENT

| #0 | #1 | #2 | #3 | #4 | #5 | #6 | #7 |

2 SEGMENTS

| #0 | #1 | #2 | #3 | #4 | #5 | #6 | #7 |

3 SEGMENTS

| #0 | #1 | #2 | #3 | #4 | #5 | #6 | #7 |

→ MIB

4 SEGMENTS

EP 2 068 596 A2

# FIG.5

PDSCH for SU

SU-1        Other SU or User Data

#0 #1 #2 #3 #4 #5 #6 #7 #8 #9 #10 #11 #12 #13 #14 #15    1 SEGMENT

#0 #1 #2 #3 #4 #5 #6 #7 #8 #9 #10 #11 #12 #13 #14 #15    2 SEGMENTS

#0 #1 #2 #3 #4 #5 #6 #7 #8 #9 #10 #11 #12 #13 #14 #15    3 SEGMENTS

#0 #1 #2 #3 #4 #5 #6 #7 #8 #9 #10 #11 #12 #13 #14 #15    4 SEGMENTS

FIG.6

Physical Parameters

SB for SU1

SB for SU2

SB for SUn

MIB

SIB 1

SU-1

SIB 2

SIB 5

SU-2

SIB m

SU-n

SIB

FIG.7

FIG.8

FIG.9

FIG.10

SYSTEM
INFORMATION
GENERATOR

~110

INFORMATION
SEGMENTATION
SECTION

~130

~100

SYSTEM
INFORMATION
TRANSMITTER

~120

SYSTEM
INFORMATION
DEDICATED
CHANNEL

SHARED CHANNEL

MIB

SIB

FIG.11

FIG.12

START

CONFIGURE AND SEGMENT
SU-2, SU-3, ···, SU-n ~S110

i = 1

CONFIGURE AND SEGMENT
SU-1(i+1) ~S120

CONFIGURE AND SEGMENT
MIB(i), MIB(i+1) ~S130

i = i + 1

M_Seg(i) <=
REFERENCE VALUE
< M_Seg(i+1) ~S140

NO

i == n

NO

YES

YES

TRANSMIT MIB(i), SU-1(i+1),
SU-2, ···, SU-n ~S150

END

FIG.13

```
                    ┌─────────────┐
                    │    START    │
                    └──────┬──────┘
                           │
       ┌───────────────────▼───────────────────┐
       │  GENERATE SYSTEM INFORMATION BY SELECTIVELY │
       │ INSERTING SBS CONTAINING SCHEDULING INFORMATION │
       │   FOR SUS INTO MIB AND FIRST SU OF SIB  │
       └───────────────────┬───────────────────┘
                           │                        ~S210
       ┌───────────────────▼───────────────────┐
       │   TRANSMIT GENERATED SYSTEM INFORMATION ON │
       │  PHYSICAL CHANNELS THROUGH BCH BY SEGMENTING │
       │    SYSTEM INFORMATION IN TB SIZE OF BCH  │
       └───────────────────┬───────────────────┘
                           │                        ~S220
       ┌───────────────────▼───────────────────┐
       │  TRANSMIT MIB ON SYSTEM INFORMATION DEDICATED │
       │  CHANNEL OF PHYSICAL CHANNEL AND TRANSMIT SIB │
       │   ON SHARED CHANNEL OF PHYSICAL CHANNEL   │
       └───────────────────┬───────────────────┘
                           │                        ~S230
                    ┌──────▼──────┐
                    │     END     │
                    └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020070126354